# DEMANDE DE BREVET EUROPEEN

(11) **EP 3 628 461 A1**
(43) Date de publication de la demande: **01.04.2020**
(21) Numéro de dépôt: 19198932.6
(22) Date de dépôt: 23.09.2019
(51) Int. Cl.: B29C 33/00, B29D 99/00, B32B 3/12, B29C 70/30

(54) **PROCEDE DE FABRICATION DE DEUX PANNEAUX INSONORISANTS DANS UN MÊME MOULE ET MOULE POR LA RÉALISATION DE DEUX PANEAUX INSONORISANTS**

(30) Priorité: 28.09.2018 FR 1858999
(71) Demandeur: AIRBUS OPERATIONS, 31060 Toulouse Cedex 9 (FR)
(72) Inventeur: PORTE, Alain, 31770 COLOMIERS (FR); LALANE, Jacques, 31650 SAINT ORENS DE GAMEVILLE (FR)
(74) Mandataire: Cabinet Le Guen Maillet

(57) **Abrégé**

L'invention concerne un procédé de fabrication de deux panneaux insonorisants (26a, 26b) d'une nacelle d'un aéronef comportant une veine, le procédé de fabrication comportant :
- une étape de fourniture d'un moule (52) présentant sur une même face, une cavité (54a, 54b) pour chaque panneau insonorisant (26a, 26b),
- une étape de réalisation dans le fond de chaque cavité (54a, 54b) d'une peau intérieure (32a, 32b) destinée à être orientée vers la veine, et
- une étape de cuisson au cours de laquelle les éléments présents dans le moule (52) sont cuits dans le moule (52).

Un tel procédé permet de réaliser les deux panneaux insonorisants dans le même moule réduisant ainsi les écarts entre eux après leur mise en position.

## Description

### DOMAINE TECHNIQUE

La présente invention concerne un procédé de fabrication de deux panneaux insonorisants pour un ensemble propulsif d'aéronef, ainsi qu'un moule pour la mise en oeuvre d'un tel procédé.

### ETAT DE LA TECHNIQUE ANTERIEURE

Un turbomoteur d'aéronef comporte une nacelle qui présente à l'avant une structure d'entrée d'air qui est pourvue d'une lèvre qui délimite l'intérieur et l'extérieur de la nacelle. La lèvre se prolonge vers l'intérieur de la nacelle par une paroi qui est disposée autour d'une veine qui canalise l'air en direction de la motorisation comportant entre autres une soufflante.

La paroi est équipée en particulier de panneaux insonorisants qui atténuent les bruits générés par la motorisation.

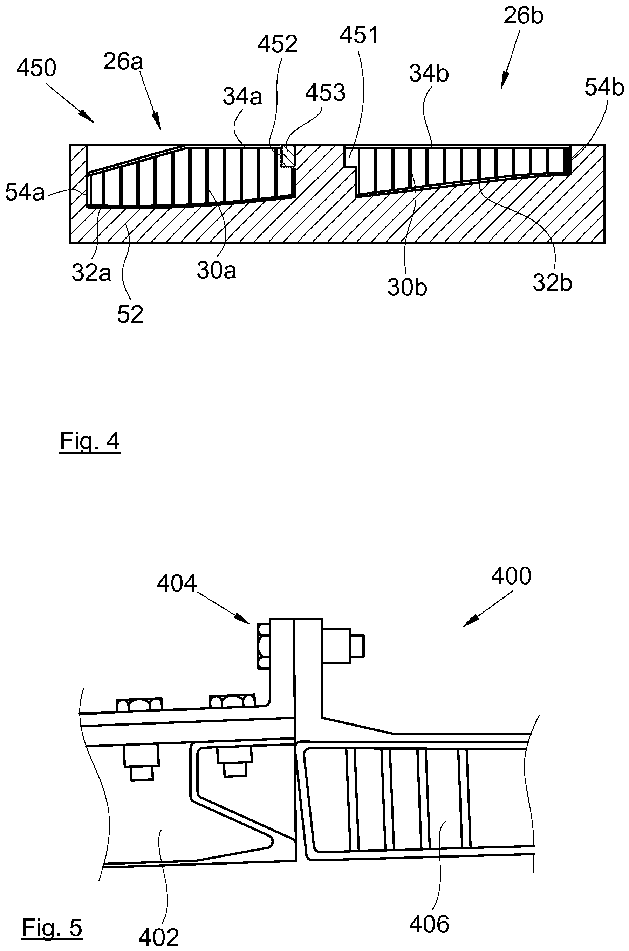

Dans le cas de l'état de la technique, il est connu d'utiliser deux panneaux insonorisants qui sont disposés l'un derrière l'autre par rapport au sens de l'écoulement de l'air dans la veine. La Fig. 5 montre une telle installation 400 de l'état de la technique.

Un premier panneau insonorisant 402, dit panneau acoustique, dont la partie avant est fixée au niveau de la lèvre et dont la partie arrière est fixée au niveau d'une bride de fixation 404.

Un deuxième panneau insonorisant 406, situé juste devant les pales du turbomoteur et à l'intérieur du carter de soufflante. La partie avant du deuxième panneau insonorisant 406 est disposée à l'arrière du premier panneau insonorisant 402 et est fixée au niveau de la bride de fixation 404.

Bien qu'une telle architecture donne de bons résultats, le fait que ces deux panneaux insonorisants soient réalisés indépendamment l'un de l'autre, entraîne l'apparition d'un décalage radial entre les deux panneaux insonorisants et donc d'une marche qui engendre des perturbations aérodynamiques et une augmentation de la traînée.

En outre, un écart parallèlement à l'axe longitudinal du turbomoteur peut apparaître du fait de l'architecture de la liaison entre les deux panneaux insonorisants.

### EXPOSE DE L'INVENTION

Un objet de la présente invention est de proposer un procédé de fabrication de deux panneaux insonorisants pour un moteur d'aéronef qui permet d'éliminer le décalage radial et l'écart entre les deux panneaux insonorisants.

A cet effet, est proposé un procédé de fabrication de deux panneaux insonorisants d'une nacelle d'un aéronef comportant une veine où chaque panneau insonorisant comporte une peau intérieure destinée à être orientée vers la veine, le procédé de fabrication comportant :
- une étape de fourniture d'un moule présentant sur une même face, une cavité pour chaque panneau insonorisant,
- une étape de réalisation dans le fond de chaque cavité d'une peau intérieure, et
- une étape de cuisson au cours de laquelle les éléments présents dans le moule sont cuits dans le moule.

Un tel procédé permet de réaliser les deux panneaux insonorisants dans le même moule réduisant ainsi les écarts entre eux après leur mise en position.

Selon un mode de réalisation particulier, entre l'étape de réalisation et l'étape de cuisson, le procédé comporte une étape de mise en place d'une âme en nid d'abeilles au-dessus de chaque peau intérieure puis une étape de mise en place au-dessus de chaque âme d'un panneau extérieur.

Selon un mode de réalisation particulier, le procédé de fabrication comporte après l'étape de cuisson, une étape de mise en place d'une âme en nid d'abeilles au-dessus de chaque peau intérieure puis une étape de mise en place au-dessus de chaque âme d'un panneau extérieur.

L'invention propose également un moule pour la réalisation de deux panneaux insonorisants d'une nacelle d'un aéronef comportant une veine où chaque panneau insonorisant comporte une peau intérieure destinée à être orientée vers la veine, où le moule présente sur une même face, une cavité pour chaque panneau insonorisant, où le fond de chaque cavité matérialise la surface de la peau intérieure.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue de côté d'un aéronef selon l'invention,
la Fig. 2 est une vue de côté et en coupe d'un détail d'un turbomoteur selon l'invention,
la Fig. 3 est une représentation schématique d'un outillage permettant la mise en oeuvre d'un procédé de fabrication selon un premier mode de réalisation de l'invention,
la Fig. 4 est une représentation schématique d'un outillage permettant la mise en oeuvre d'un procédé de fabrication selon un deuxième mode de réalisation de l'invention, et
la Fig. 5 montre une vue de côté de panneaux insonorisants selon l'état de la technique.

### EXPOSE DETAILLE DE MODES DE REALISATION

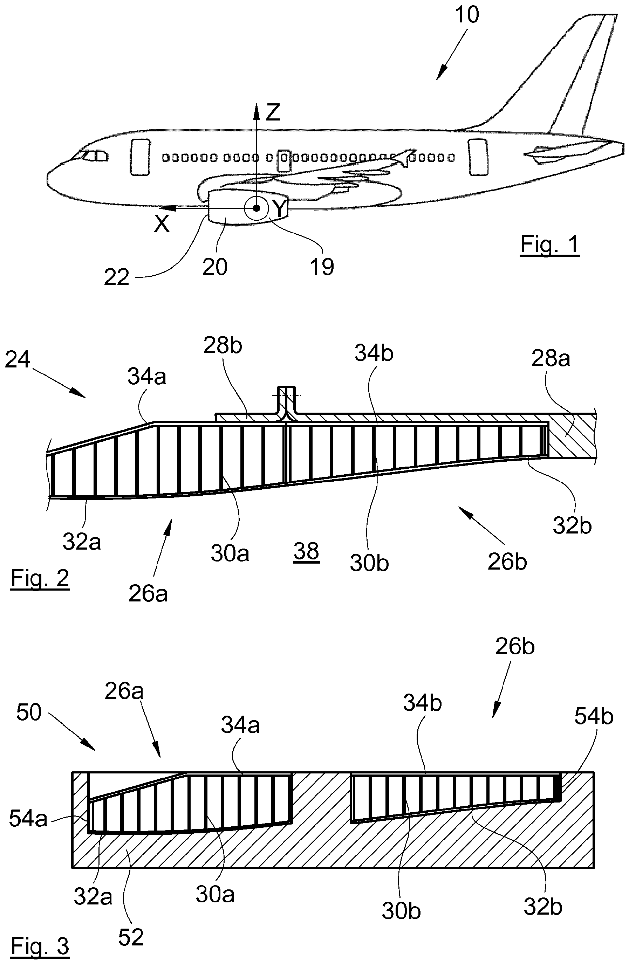

Dans la description qui suit, les termes relatifs à une position sont pris en référence à un aéronef en position d'avancement, c'est-à-dire comme il est représenté sur la Fig. 1.

La Fig. 1 montre un aéronef 10 qui comporte au moins un turbomoteur 20.

Dans toute la description qui va suivre, par convention, la direction X correspond à la direction longitudinale du turbomoteur 20, cette direction étant parallèle à l'axe longitudinal X du turbomoteur 20. D'autre part, la direction Y correspond à la direction orientée transversalement par rapport au turbomoteur 20, et la direction Z correspond à la direction verticale ou hauteur, ces trois directions X, Y, Z étant orthogonales entre elles.

Le turbomoteur 20 comporte classiquement une nacelle 19 qui comporte une structure d'entrée d'air 22 comportant une structure interne 24 (Fig. 2).

La Fig. 2 montre une coupe de la structure interne 24 qui permet un traitement acoustique. La structure interne 24 est disposée autour d'une veine 38 qui canalise l'air vers une motorisation qui comporte entre autres une soufflante.

La structure interne 24 comporte successivement deux panneaux insonorisants 26a et 26b qui sont fixés à une structure 28a, 28b de la nacelle 19. La fixation des deux panneaux insonorisants 26a et 26b n'est pas décrite plus précisément et reprend par exemple les mêmes éléments que pour un turbomoteur de l'état de la technique.

Chaque panneau insonorisant 26a, 26b prend la forme d'une structure multicouche qui présente une âme en nid d'abeilles 30a, 30b qui est fixée entre une peau intérieure 32a, 32b orientée vers la veine 38 et un panneau extérieur 34a, 34b orienté à l'opposé. Chaque panneau insonorisant 26a, 26b présente une surface de contact qui est en contact avec la surface de contact de l'autre panneau insonorisant 26b, 26a.

Chaque peau intérieure 32a, 32b est poreuse permettant aux ondes sonores de se propager dans l'âme 30a, 30b pour y être atténuées. La porosité est réalisée par exemple par des trous (non représentés) traversant chaque peau intérieure 32a, 32b.

La Fig. 3 montre un outillage 50 selon un premier mode de réalisation de l'invention et qui comporte un moule 52 présentant sur une même face, une cavité 54a, 54b pour chaque panneau insonorisant 26a, 26b. Chaque cavité 54a, 54b est ouverte sur la même face.

Le fond de chaque cavité 54a, 54b est conformé pour mouler la peau intérieure 32a, 32b du panneau insonorisant 26a, 26b associé. Ainsi, les deux peaux intérieures 32a, 32b des deux panneaux insonorisants 26a, 26b sont réalisées dans le même moule 52 ce qui évite les cumuls de tolérances lorsque des moules différents sont utilisés. En effet, les deux cavités 54a et 54b sont usinées au cours d'un même processus par une même machine qui peut garder la même référence tout le long de l'usinage. Après montage des deux panneaux insonorisants 26a et 26b, les écarts entre eux sont réduits par rapport à ceux des panneaux insonorisants de l'état de la technique. En outre, l'utilisation d'un même moule 52 permet de suivre le même cycle de cuisson pour les deux panneaux insonorisants 26a, 26b.

Pour chaque cavité 54a, 54b, le fond de la cavité 54a, 54b matérialise la surface de la peau intérieure 32a, 32b, la surface étant celle qui est orientée vers la veine 38.

La réalisation de chaque peau intérieure 32a, 32b s'effectue classiquement par la dépose, dans le fond de la cavité 54a, 54b, de couches de matériaux, en particulier composites, qui sont ainsi moulées dans les cavités 54a, 54b.

L'âme 30a, 30b est ensuite déposée sur la peau intérieure 32a, 32b correspondante, et chaque panneau extérieur 34a, 34b est ensuite déposé sur l'âme 30a, 30b associée.

Chaque ensemble ainsi réalisé est ensuite cuit pour prendre sa forme définitive. L'étape de cuisson s'effectue préférentiellement sous vide d'air qui est réalisé par un circuit de vide commun aux deux cavités 54a, 54b. La réalisation du vide s'effectue par exemple par mise en place d'un contre-moule qui vient obturer les deux cavités 54a, 54b.

Selon un autre mode de réalisation, les peaux intérieures 32a, 32b sont cuites simultanément dans le moule 52, tandis que les âmes 30a, 30b et les panneaux extérieurs 34a, 34b sont cuits indépendamment et fixés postérieurement.

Le procédé de fabrication selon l'invention des deux panneaux insonorisants 26a et 26b comporte :
- une étape de fourniture au cours de laquelle le moule 52 présentant une cavité 54a, 54b pour chaque panneau insonorisant 26a, 26b est fourni,
- une étape de réalisation au cours de laquelle, dans le fond de chaque cavité 54a, 54b, une peau intérieure 32a, 32b est réalisée, et
- une étape de cuisson au cours de laquelle les éléments présents dans le moule 52 sont cuits dans le moule 52.

Selon le mode de réalisation mis en oeuvre, les éléments qui subissent l'étape de cuisson sont les peaux intérieures 32a, 32b, les âmes 30a, 30b et les panneaux extérieurs 34a, 34b ou uniquement les peaux intérieures 32a, 32b.

Selon un mode de réalisation particulier, entre l'étape de réalisation et l'étape de cuisson, le procédé comporte une étape de mise en place d'une âme en nid d'abeilles 30a, 30b au-dessus de chaque peau intérieure 32a, 32b puis une étape de mise en place au-dessus de chaque âme 30a, 30b d'un panneau extérieur 34a, 34b. Les âmes 30a, 30b et les panneaux extérieurs 34a, 34b sont ainsi fixés avant cuisson.

Selon un autre mode de réalisation particulier, le procédé comporte après l'étape de cuisson, une étape de mise en place d'une âme en nid d'abeilles 30a, 30b au-dessus de chaque peau intérieure 32a, 32b puis une étape de mise en place au-dessus de chaque âme 30a, 30b d'un panneau extérieur 34a, 34b. Les âmes 30a, 30b et les panneaux extérieurs 34a, 34b sont ainsi fixés après cuisson.

Le perçage de chaque peau intérieure 32a, 32b peut s'effectuer avant ou après la fabrication du panneau insonorisant 26a, 26b.

La Fig. 4 montre un outillage 450 selon un deuxième mode de réalisation de l'invention. La différence entre l'outillage 50 du premier mode de réalisation et l'outillage 450 du deuxième mode de réalisation réside dans le fait que les surfaces de contact des deux panneaux insonorisants 26a et 26b ne sont pas planes dans le deuxième mode de réalisation.

Ainsi, dans le mode de réalisation de la Fig. 4, la surface de contact du panneau insonorisant 26a présente un logement 452 en partie haute et la surface de contact du panneau insonorisant 26b présente une excroissance 451 qui est prévue pour loger dans le logement 452 lorsque les deux panneaux insonorisants 26a et 26b sont mis en place.

Afin de réaliser le logement 452 lors de la réalisation du panneau insonorisant 26a, le moule 52 comporte une clé de démoulage 453 qui est fixée dans la cavité 54a en lieu et place du logement 452 et qui est amovible pour permettre le démoulage du panneau insonorisant 26a.

L'invention est plus particulièrement décrite dans le cadre d'un turbomoteur, mais elle s'applique de la même manière à tous types d'ensembles propulsifs pour un aéronef 10.

## Revendications

1. Procédé de fabrication de deux panneaux insonorisants (26a, 26b) d'une nacelle (19) d'un aéronef (10) comportant une veine (38) où chaque panneau insonorisant (26a, 26b) comporte une peau intérieure (32a, 32b) destinée à être orientée vers la veine (38), le procédé de fabrication comportant :
- une étape de fourniture d'un moule (52) présentant sur une même face, une cavité (54a, 54b) pour chaque panneau insonorisant (26a, 26b),
- une étape de réalisation dans le fond de chaque cavité (54a, 54b) d'une peau intérieure (32a, 32b), et
- une étape de cuisson au cours de laquelle les éléments présents dans le moule (52) sont cuits dans le moule (52).

2. Procédé de fabrication selon la revendication 1, **caractérisé en ce qu'**entre l'étape de réalisation et l'étape de cuisson, le procédé comporte une étape de mise en place d'une âme en nid d'abeilles (30a, 30b) au-dessus de chaque peau intérieure (32a, 32b) puis une étape de mise en place au-dessus de chaque âme (30a, 30b) d'un panneau extérieur (34a, 34b).

3. Procédé de fabrication selon la revendication 1, **caractérisé en ce qu'**il comporte après l'étape de cuisson, une étape de mise en place d'une âme en nid d'abeilles (30a, 30b) au-dessus de chaque peau intérieure (32a, 32b) puis une étape de mise en place au-dessus de chaque âme (30a, 30b) d'un panneau extérieur (34a, 34b).

4. Moule (52) pour la réalisation de deux panneaux insonorisants (26a, 26b) d'une nacelle (19) d'un aéronef (10) comportant une veine (38) où chaque panneau insonorisant (26a, 26b) comporte une peau intérieure (32a, 32b) destinée à être orientée vers la veine (38), où le moule (52) présente sur une même face, une cavité (54a, 54b) pour chaque panneau insonorisant (26a, 26b), où le fond de chaque cavité (54a, 54b) matérialise la surface de la peau intérieure (32a, 32b).
